# EUROPÄISCHE PATENTSCHRIFT

(11) **EP 2 948 339 B1**
(45) Veröffentlichungstag und Bekanntmachung des Hinweises auf die Patenterteilung: **20.06.2018**
(21) Anmeldenummer: 14714621.1
(22) Anmeldetag: 21.03.2014
(51) Int. Cl.: B61D 17/18, B61D 33/00, B60N 2/015, B61D 17/08

(54) **BEFESTIGUNGSANORDNUNG FÜR EIN INNENAUSSTATTUNGSELEMENT AM WAGENKASTEN EINES FAHRZEUGS**
MOUNTING ARRANGEMENT FOR AN INTERIOR FURNISHING ELEMENT ON THE BODY OF A VEHICLE
SYSTÈME DE FIXATION POUR ÉLÉMENT DE FINITION INTÉRIEUR AU NIVEAU DE LA CAISSE D'UN VÉHICULE

(30) Priorität: 04.04.2013 DE 102013205995
(43) Veröffentlichungstag der Anmeldung: 02.12.2015
(73) Patentinhaber: Siemens Aktiengesellschaft, 80333 München (DE)
(72) Erfinder: SCHMIDT, Gerhard, 45127 Essen (DE)
(86) Internationale Anmeldenummer: PCT/EP2014/055678
(87) Internationale Veröffentlichungsnummer: WO 2014/161728

(56) Entgegenhaltungen:
- DE-A1- 19 535 371
- DE-A1-102008 039 165

## Beschreibung

Die Erfindung betrifft eine variable Befestigungsanordnung für ein Innenausstattungselement am Wagenkasten eines Fahrzeugs, insbesondere eines Fahrgastsitzes an der Seitenwand eines Schienenfahrzeugs, mit mindestens einer wagenkastenseitigen Eingriffseinrichtung und mit einer mit dem Innenausstattungselement verbundenen Befestigungsschiene.

Eine Befestigungsanordnung dieser Art ist aus der deutschen Offenlegungsschrift DE 10 2008 039 165 A1 bekannt. Bei dieser Befestigungsanordnung ist an der Seitenwand des Fahrzeugs eine C-Profilschiene angeordnet, die zur Aufnahme von Nutensteinen dient, wobei jeweils ein Nutenstein zur Anbringung eines Innenausstattungselements vorgesehen ist. Der jeweilige Nutenstein ist Bestandteil einer Eingriffseinrichtung, die durch einen Klemmkörper vervollständigt wird, der auf einen äußeren Zapfen des Nutensteins aufgeschraubt ist und dabei ein in Richtung auf die C-Profilschiene ausgerichtete Formteil festklemmt. Dieses Formteil ist mit dem Innenausstattungselement verbunden.

Der Erfindung liegt die Aufgabe zugrunde, eine Befestigungsanordnung für ein Innenausstattungselement innen am Wagenkasten eines Fahrzeugs anzugeben, die sich vergleichsweise einfach und damit kostengünstig herstellen lässt.

Zur Lösung dieser Aufgabe weist die Befestigungsanordnung in Fahrzeuglängsrichtung Aussparungen auf, in die mindestens ein Halteelement der Eingriffseinrichtung eingreift, und die Eingriffseinrichtung ist derart mit der Befestigungsschiene verbunden, dass die Befestigungsschiene mit dem Innenausstattungselement in Fahrzeuglängsrichtung in Bezug auf die Eingriffseinrichtung um einen Verstellweg verstellbar ist, der mindestens dem größten Abstand zweier aufeinander folgender Aussparungen entspricht.

Ein wesentlicher Vorteil der erfindungsgemäßen Befestigungsanordnung besteht darin, dass sie prinzipiell ohne eine Profilschiene, insbesondere eine C-Profilschiene, auskommt, weil die Eingriffseinrichtung mit ihrem mindestens einen Halteelement direkt von vorn in die Aussparungen eingreift; es ist dann auch nicht erforderlich, von der Seite her in eine C-Profilschiene Bestandteile der Befestigungseinrichtung - wie Nutensteine bei der bekannten Befestigungsanordnung - vom Ende der C-Profilschiene einzubringen. Dabei ist in vorteilhafter Weise wegen der Verstellbarkeit der Eingriffseinrichtung nach wie vor die Möglichkeit gegeben, das Innenausstattungselement in der jeweils gewünschten Position im Wagenkasten anzuordnen.

Bei der erfindungsgemäßen Befestigungsanordnung können die Aussparungen in unterschiedlich großen Abständen nacheinander in Fahrzeuglängsrichtung angeordnet werden, um speziellen Ausgestaltungen des jeweiligen Wagenkastens gerecht zu werden. Ist dabei beachtet, dass der Verstellweg der Befestigungsschiene mindestens dem größten Abstand zweier aufeinander folgender Aussparungen entspricht, dann kann das Innenausstattungselement in der jeweils gewünschten Position in einfacher Weise befestigt werden. Sofern es die Konstruktion des Wagenkastens zulässt, ist es besonders vorteilhaft, wenn die Aussparungen in gleichen Abständen voneinander angeordnet sind.

Unter anderem aus Stabilitätsgründen kann es vorteilhaft sein, wenn bei der erfindungsgemäßen Befestigungsanordnung die Aussparungen in einer Längsschiene am Wagenkasten untergebracht sind.

Ferner wird es als vorteilhaft angesehen, wenn die Eingriffseinrichtung derart mit der Befestigungsschiene verbunden ist, dass die Befestigungsschiene stufenlos verstellbar ist. In diesem Falle kann die Position des Innenausstattungselementes durch Auswahl einer oder mehrerer benachbarter Aussparungen grob vorbestimmt und durch die stufenlose Verstellung der Befestigungsschiene genau eingestellt werden.

Unter anderem zur Erzielung relativ kurzer Montagezeiten wird es als vorteilhaft erachtet, die Eingriffseinrichtung derart mit der Befestigungsschiene zu verbinden, dass die Befestigungsschiene gestuft und stufenlos verstellbar ist. Hierdurch ist die Möglichkeit gegeben, das Innenausstattungselement zunächst grob durch Auswahl von bestimmten Aussparungen zu bestimmen und anschließend weniger grob die Befestigungsschiene mit dem Innenausstattungselement entsprechend gestuft einzustellen; abschließend erfolgt dann die stufenlose Verstellung der Befestigungsschien mit dem Innenausstattungselement.

Bei einer besonders vorteilhaften Ausführungsform der erfindungsgemäßen Befestigungsanordnung ist die Eingriffseinrichtung nach Art einer Kralle mit seitlichen Einschnürungen zur Einbringung durch Einschwenken und Halterung in den Aussparungen ausgestattet. Die Anbringung der Eingriffseinrichtung ist sehr einfach und damit kostengünstig.

Bei dieser Ausführungsform der erfindungsgemäßen Befestigungsanordnung befindet sich vorteilhafterweise in der Eingriffseinrichtung ein Nutenstein, und die Befestigungsschiene ist mit dem Nutenstein mittels eines durch ein Befestigungsloch der Befestigungsschiene geführten Verbindungselements verbunden. Das Verbindungselement ist in vorteilhafter Weise eine Schraube.

Um bei der erfindungsgemäßen Befestigungsanordnung eine gestufte Verstellung der Befestigungsschiene auf einfache Weise zu erreichen, sind mit dem Befestigungsloch der Befestigungsschiene weitere Befestigungslöcher in einer horizontalen Reihe angeordnet. Dabei können die Löcher unterschiedliche Abstände voneinander aufweisen.

Ausreichend und leicht herstellbar ist jedoch eine Befestigungsschiene, bei der die Befestigungslöcher jeweils einen gleichgroßen Lochabstand voneinander haben. Dabei beträgt der Lochabstand der Befestigungslöcher vorteilhafterweise einen Bruchteil des Abstands der Aussparungen beträgt.

Um eine einfache stufenlose Einstellung der Befestigungsschiene zu erreichen, weist die Eingriffseinrichtung Langlöcher mit einem dem Lochabstand der Befestigungslöcher entsprechenden Abstand auf.

Die Befestigungsschiene kann unterschiedlich ausgebildet sein. Als vorteilhaft wird es angesehen, wenn die Befestigungsschiene als Profilschiene ausgebildet ist und die Längsschiene übergreift. Dabei ist es zur Steigerung des Fahrkomforts bzw. zur thermischen und mechanischen Entkopplung des Innenausstattungselements vom Wagenkasten vorteilhaft, zwischen der Längsschiene und der Profilschiene eine elastische Zwischenlage anzuordnen.

Aus demselben Grunde befindet sich in den Einschnürungen der Eingriffseinrichtung eine elastische Hülse zur formschlüssigen Aufnahme der Eingriffseinrichtung in der jeweiligen Aussparung.

Bei einer anderen vorteilhaften Ausführungsform der erfindungsgemäßen Befestigungseinrichtung weist die Längsschiene eine vom Innern des Wagenkastens zugängliche, obere Tragfläche für eine Seite der Befestigungsschiene auf, und mindestens ein Verbindungsteil der Eingriffseinrichtung untergreift mit einem Ende die Längsschiene und liegt mit seinem anderen Ende an der Befestigungsschiene an.

Ein Vorteil dieser Ausführungsform der erfindungsgemäßen Befestigungsanordnung besteht darin, dass die Längsschiene vergleichsweise einfach ausgeführt werden kann, weil sie lediglich eine obere Tragfläche für die Befestigungsschiene und seitliche Aussparungen aufweisen muss. Dies ermöglicht auch eine relativ einfache Anbringung des Innenausstattungselements an der Längsschiene, weil dazu lediglich die Befestigungsschiene oben auf die Längsschiene aufgelegt und das Verbindungteil die Längsschiene untergreifend angeordnet und dabei mindestens ein Halteelement in eine Aussparung eingesteckt werden muss; schließlich ist noch eine Verbindung dieser Teile mit dem Innenausstattungselement vorzunehmen.

Dabei besitzt die Längsschiene vorteilhafterweise ein U-Profil, ist nach oben offen am Wagenkasten angebracht und bildet oben mit einem Schenkel die Tragfläche für die Befestigungsschiene. Es kommen aber auch andere Profile für die Längsschiene in Frage.

Auch die Befestigungsschiene kann bei der erfindungsgemäßen Befestigungsanordnung unterschiedlich ausgeführt sein. Vorteilhafterweise ist die Befestigungsschiene an ihrer einen Seite hakenförmig ausgebildet und greift mit ihrer hakenförmigen Seite von oben in das U-Profil der Längsschiene ein; mit ihrer von der hakenförmigen Seite abgewandten Montageseite ist die Befestigungsschiene an dem Innenausstattungselement befestigt.

Auch hier ist es vorteilhaft, wenn sich zur thermischen und mechanischen Entkopplung des Innenausstattungselements vom Wagenkasten unter der hakenförmigen Seite der Befestigungsschiene eine elastische Zwischenlage befindet.

Unter Erzielung eines entsprechenden Vorteils ist zwischen der Längsschiene und der einen Seite der Befestigungsschiene ein elastisches Polster (13) angeordnet.

Vorteilhaft ist es ferner, wenn bei dieser Ausführungsform der erfindungsgemäßen Befestigungsanordnung die Eingriffseinrichtung mindestens ein Halteelement an einem schienenförmigen Tragkörper aufweist, der zwischen der Befestigungsschiene und dem Verbindungselement gehalten ist und das mindestens eine Halteelement in die Aussparungen des Wagenkastens eingreift.

Vorteilhafterweise ist der schienenförmige Tragkörper gemeinsam mit dem Verbindungsteil an der Befestigungsschiene angebracht.

Um auch bei dieser Ausführungsform der erfindungsgemäßen Befestigungsanordnung eine stufenlose Verstellung der Befestigungsschiene in Bezug auf die Eingriffseinrichtung zu gewährleisten, weist der schienenförmige Tragkörper sich in seiner Längsrichtung erstreckende Langlöcher auf, und die Langlöcher haben eine Mindestlänge, die dem Abstand zweier benachbarter Aussparungen entspricht; in die Langlöcher ragen Befestigungselemente hinein.

Zur weiteren Erläuterung der Erfindung ist in
Figur 1 eine Seitenansicht eines Ausführungsbeispiels der erfindungsgemäßen Befestigungsanordnung mit gestufter und stufenloser Verstellmöglichkeit einer Befestigungsschiene am Innenausstattungselement eines Fahrzeugs in Bezug auf seinen Wagen, in
Figur 2 ein Schnitt entlang der Linie II-II gemäß Fig.1, in
Figur 3 ein Schnitt entlang der Linie III-III gemäß Figur 2, in
Figur 4 teilweise im Schnitt und teilweise in einer Seitenansicht ein weiteres Ausführungsbeispiel der erfindungsgemäßen Befestigungsanordnung mit stufenloser Verstellmöglichkeit einer Befestigungsschiene am Innenausstattungselement eines Fahrzeugs in Bezug auf seinen Wagen einer Seitenwandschiene mit Eingriffseinrichtung, in
Fig.5 ein Schnitt entlang der Linie V-V gemäß Fig. 4 und in
Figur 6 ein Schnitt entlang der Linie VI-VI gemäß Fig. 4 gezeigt.

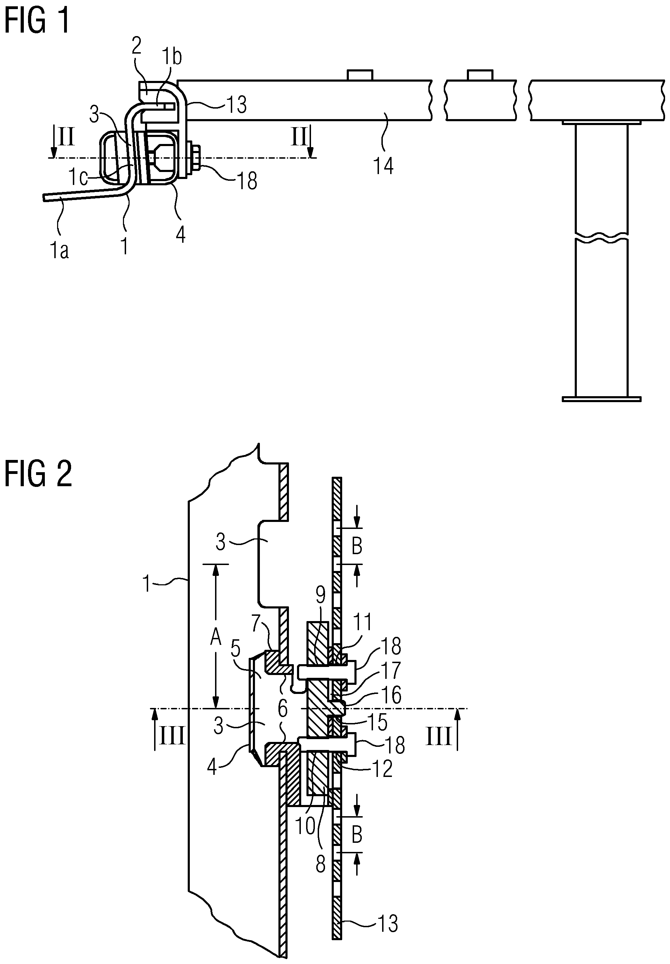

Die Figur 1 lässt eine Längsschiene 1 erkennen, die in nicht dargestellter Weise mit einer Seitenwand eines Wagenkastens eines Schienenfahrzeugs an ihrem Ende 1a verbunden ist. Die Längsschiene 1 weist ein S-förmiges Profil auf, das an einem oberen Ende der Längsschiene 1 eine Auflagefläche 1b für eine elastische Zwischenlage 2 bildet. Die Längsschiene 1 weist in ihrem mittleren Bereich 1c Aussparungen 3 auf, die in einem vorgegebenen Lochabstand A hintereinander eine horizontale Reihe bildend angeordnet sind, wie insbesondere Figur 2 erkennen lässt.

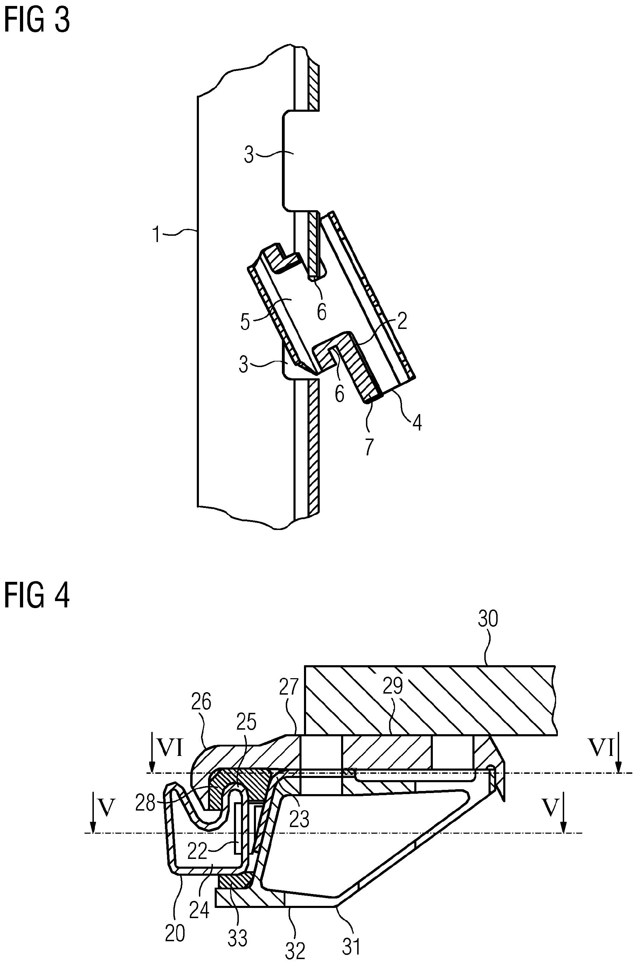

In eine Aussparung 3 ist im Rahmen einer ersten groben Positionierung - wie wiederum Figur 2 besonders deutlich zeigt - ein Halteelement 4 einer Eingriffseinrichtung 5 eingebracht, die zu diesem Zwecke mit Einschürungen 6 versehen ist (vgl. auch Fig.3). In den Einschnürungen 6 befindet sich eine elastische Hülse 7, die nicht nur einen sicheren Sitz des Halteelements 4 der Eingriffseinrichtung 5 in der Aussparung 3 sicherstellt, sondern auch die Übertragung mechanischer Erschütterungen von der Seitenwand des Fahrzeugs her in gewünschter Weise erschwert.

Die Eingriffseinrichtung 5 weist ferner einen Nutenstein 8 auf, der mit Gewindebohrungen 9 und 10 versehen ist. Diese Gewindebohrungen 9 und 10 sind in einem Abstand vorgesehen, der dem Abstand zwischen einem Befestigungsloch 11 und einem übernächsten weiteren Befestigungsloch 12 in einer Befestigungsschiene 13 eines Innenausstattungselements 14 entspricht, wie es insbesondere die Figur 1 zeigt. In ein weiteres Befestigungsloch 15 greift ein Mitnehmerzapfen 16 des Nutensteins 8 ein. Das Befestigungsloch 11 und die weiteren Befestigungslöcher 12 und 15 haben jeweils einen Lochabstand B voneinander, der einen Bruchteil des Lochabstandes A der Aussparungen 3 ausmacht. Auf diese Weise ist die Möglichkeit gegeben, die Befestigungsschiene 13 mit dem Innenausstattungselement 14 in Bezug auf die Längsschiene 1 feiner auszurichten, als es mit der groben Ausrichtung möglich war. Schließlich ist noch eine letzte, genaue stufenlose Ausrichtung möglich, indem das Halteelement 4 in einem Bereich zwischen dem Nutenstein 8 und der Befestigungsschiene 13 mit Langlöchern 17 versehen ist.

Das Halteelement 4 ist im Querschnitt etwa rechteckförmig ausgestaltet ist und nahezu in sich geschlossen - siehe Fig. 1 -. Diese Figur zeigt auch deutlich, dass die Befestigungsschiene 13 die elastische Zwischenlage 2 auf der Längsschiene 1 unter Halterung des Innenausstattungselements 14 übergreift, wodurch das Innenausstattungselement 14 elastisch gelagert ist. Die Fig. 1 zeigt ferner, dass Verbindungselemente in Form von Schrauben 18 in den Nutenstein 4 eingeschraubt sind und dabei das Halteelement 4 mit der Längsschiene 1 und der Befestigungsschiene 13 verspannen.

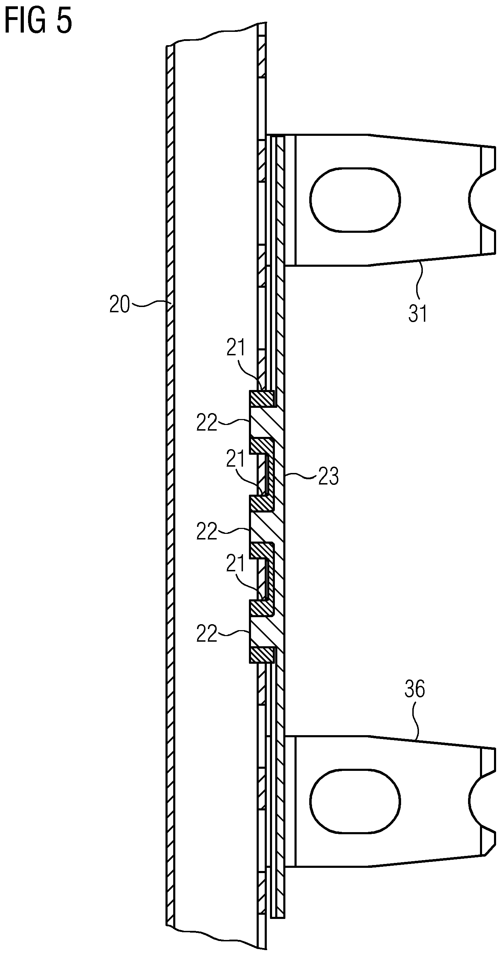

Fig. 4 lässt erkennen, dass eine an einer nicht dargestellten Seitenwand eines Wagenkastens eines ebenfalls nicht gezeigten Fahrzeugs angebrachte Längsschiene 20 ein U-Profil aufweist und so an der Seitenwand angebracht ist, dass das Profil nach oben offen ist. Die Längsschiene 20 weist seitliche Aussparungen 21 auf, die - wie Fig. 5 zeigt - in gleichen Abständen von einander angeordnet sind.

In dem dargestellten Ausführungsbeispiel greifen in drei der Aussparungen 21 als Zapfen ausgebildete Halteelemente 22 an einem schienenförmigen Tragkörper 23 einer Eingriffseinrichtung 24 ein.

Wie der Fig. 4 ferner zu entnehmen ist, bildet die Längsschiene 20 mit ihrem in der Fig. 1 rechten Schenkel eine obere Tragfläche 25 für ein Ende 26 einer Befestigungsschiene 27. Die Befestigungsschiene 27 ist dazu an ihrem einen Ende 26 hakenförmig ausgestaltet. Zwischen dem hakenförmigen Ende 26 und der Längsschiene 20 befindet sich eine elastische Zwischenlage 28 zur thermischen und mechanischen Entkopplung. Mit ihrem anderen Montageende 29 ist die Befestigungsschiene 27 mit einem Innenausstattungselement 30, beispielsweise einem Fahrgastsitz, des nicht gezeigten Fahrzeugs verbunden, vorzugsweise verschraubt.

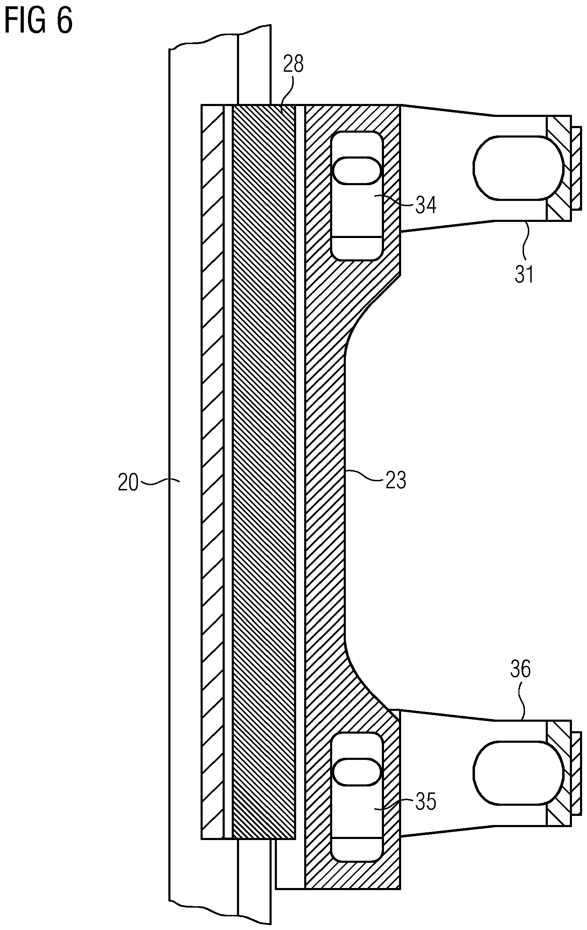

Die Figuren 4 und 5 zeigen außerdem, dass ein Verbindungsteil 31 vorhanden ist, das mit seinem einen Ende 32 die Längsschiene 20 untergreift. Zwischengelegt ist hier ein elastisches Polster 33, das ebenfalls der thermischen und mechanischen Entkopplung von Längsschiene 20 und Innenausstattungselement 30 dient. Das Verbindungsteil 31 ist in nicht dargestellter Weise gemeinsam mit dem schienenförmigen Tragkörper 23 und der Befestigungsschiene 27 mit dem Innenausstattungselement 30 verschraubt. Dabei ermöglichen sich in Längsrichtung des Fahrzeugs erstreckende Langlöcher 34 und 35 im schienenförmigen Tragkörper 23 (vergl. Fig. 6) eine stufenlose Verstellung des Innenausstattungselements 30 in Bezug auf die jeweilige Position der Haltelemente 22 in der Längsschiene 20.

Fig. 5 lässt erkennen, dass bei der dargestellten Befestigungsanordnung das hier nicht sichtbare Innenausstattungselement 30 nicht nur mit einem Verbindungsteil 31 entsprechend Fig. 4, sondern mit einem weiteren Verbindungsteil 36 an der Längsschiene 20 angebracht ist. Dabei erfolgt die Verbindung im Bereich des weiteren Verbindungsteils 36 an der Längsschiene 20 in derselben Weise, wie es anhand der Fig. 4 oben beschrieben worden ist.

## Patentansprüche

1. Variable Befestigungsanordnung für ein Innenausstattungselement (14;30) am Wagenkasten eines Fahrzeugs, insbesondere eines Fahrgastsitzes an der Seitenwand eines Schienenfahrzeugs, mit mindestens einer wagenkastenseitigen Eingriffseinrichtung(5;24) und mit einer mit dem Innenausstattungselement (14;30) verbundenen Befestigungsschiene (13;27),
**dadurch gekennzeichnet, dass**
die Befestigungsanordnung in Fahrzeuglängsrichtung Aussparungen (3;21) aufweist,
in die Aussparungen (3;21) mindestens ein Halteelement (4;22) der Eingriffseinrichtung (5;24) eingreift und
die Eingriffseinrichtung (5;24) derart mit der Befestigungsschiene (13;27) verbunden ist, dass die Befestigungsschiene (13;27) mit dem Innenausstattungselement (14;30) in Fahrzeuglängsrichtung in Bezug auf die Eingriffseinrichtung (5;24) um einen Verstellweg verstellbar ist, der mindestens dem größten Abstand zweier aufeinander folgender Aussparungen (3;22) entspricht.

2. Befestigungsanordnung nach Anspruch 1,
**dadurch gekennzeichnet, dass**
die Aussparungen (3;21) in gleichen Abständen voneinander angeordnet sind.

3. Befestigungsanordnung nach Anspruch 1 oder 2,
**dadurch gekennzeichnet, dass**
die Aussparungen (3;21) in einer Längsschiene (1;20) am Wagenkasten untergebracht sind.

4. Befestigungsanordnung nach einem der Ansprüche 1 bis 3,
**dadurch gekennzeichnet, dass**
die Eingriffseinrichtung (24) derart mit der Befestigungsschiene (27) verbunden ist, dass die Befestigungsschiene (27) stufenlos verstellbar ist.

5. Befestigungsanordnung nach einem der Ansprüche 1 bis 3,
**dadurch gekennzeichnet, dass**
die Eingriffseinrichtung (5) derart mit der Befestigungsschiene (13) verbunden ist, dass die Befestigungsschiene (13) stufenlos und gestuft verstellbar ist.

6. Befestigungsanordnung einem vorangehenden Ansprüche,
**dadurch gekennzeichnet, dass**
die Eingriffseinrichtung (5) nach Art einer Kralle mit seitlichen Einschnürungen (6) zur Einbringung durch Einschwenken und Halterung in den Aussparungen (3) ausgestattet ist.

7. Befestigungsanordnung nach Anspruch 5,
**dadurch gekennzeichnet, dass**
sich in der Eingriffseinrichtung (5) ein Nutenstein (8) befindet und die Befestigungsschiene (13) mit dem Nutenstein (8) mittels mindestens eines durch ein Befestigungsloch (11,12) der Befestigungsschiene (13) geführten Verbindungselements (18) verbunden ist.

8. Befestigungsanordnung nach Anspruch 7,
**dadurch gekennzeichnet, dass**
das Verbindungselement eine Schraube (18) ist.

9. Befestigungsanordnung nach Anspruch 7 oder 8,
**dadurch gekennzeichnet, dass**
mit dem Befestigungsloch (11;12) der Befestigungsschiene (13) weitere Befestigungslöcher (15) in einer horizontalen Reihe angeordnet sind.

10. Befestigungsanordnung nach einem der Ansprüche 7 bis 10,
**dadurch gekennzeichnet, dass**
die Befestigungslöcher (11,12,15) jeweils einen gleichgroßen Lochabstand (B) voneinander haben.

11. Befestigungsanordnung nach Anspruch 9 oder 10,
**dadurch gekennzeichnet, dass**
der Lochabstand (B) der Befestigungslöcher (11,12,15) einen Bruchteil des Abstands (A) der Aussparungen (3) beträgt.

12. Befestigungsanordnung nach einem der Ansprüche 7 bis 11,
**dadurch gekennzeichnet, dass**
die Eingriffseinrichtung (5) Langlöcher (17) mit einem dem Lochabstand (B) der Befestigungslöcher (11,12,15) entsprechenden Abstand aufweist.

13. Befestigungsanordnung nach einem der Ansprüche 2 bis 11,
**dadurch gekennzeichnet, dass**
die Befestigungsschiene als Profilschiene (13) ausgebildet ist und die Längsschiene (1) übergreift.

14. Befestigungsanordnung nach Anspruch 13,
**dadurch gekennzeichnet, dass**
zwischen der Längsschiene (1) und der Profilschiene (13) eine elastische Zwischenlage (2) angeordnet ist.

15. Befestigungsanordnung nach einem der vorangehenden Ansprüche 6 bis 14,
**dadurch gekennzeichnet, dass**
sich in den Einschnürungen (6) der Eingriffseinrichtung (5) eine elastische Hülse (7) zur formschlüssigen Aufnahme der Eingriffseinrichtung (5) in der jeweiligen Aussparung (3) befindet.

16. Befestigungsanordnung nach Anspruch 2 oder 3,
**dadurch gekennzeichnet, dass**
die Längsschiene (20) eine vom Innern des Wagenkastens zugängliche, obere Tragfläche (25) für eine Seite (26) der Befestigungsschiene (27) aufweist und
mindestens ein Verbindungsteil (31) der Eingriffseinrichtung (24) mit einem Ende (32) die Längsschiene (20) untergreift und mit seinem anderen Ende an der Befestigungsschiene (27) anliegt.

17. Befestigungsanordnung nach Anspruch 16,
**dadurch gekennzeichnet, dass**
die Längsschiene (20) ein U-Profil besitzt, nach oben offen am Wagenkasten angebracht ist und oben mit einem Schenkel die Tragfläche (25) für die Befestigungsschiene (27) bildet.

18. Befestigungsanordnung nach Anspruch 17,
**dadurch gekennzeichnet, dass**
die Befestigungsschiene (27) an ihrer einen Seite (26) hakenförmig ausgebildet ist und mit ihrer hakenförmigen Seite (26) von oben in das U-Profil der Längsschiene (20) eingreift sowie mit
ihrer von der hakenförmigen Seite (26) abgewandten Montageseite (29) an dem Innenausstattungselement (30) befestigt ist.

19. Befestigungsanordnung nach Anspruch 18,
**dadurch gekennzeichnet, dass**
sich unter der hakenförmigen Seite (26) der Befestigungsschiene (27) eine elastische Zwischenlage (28) befindet.

20. Befestigungsanordnung nach einem der Ansprüche 16 bis 19,
**dadurch gekennzeichnet, dass**
zwischen der Längsschiene (20) und der einen Seite (32) der Befestigungsschiene (27) ein elastisches Polster (33) angeordnet ist.

21. Befestigungsanordnung nach einem der Ansprüche 16 bis 20,
**dadurch gekennzeichnet, dass**
die Eingriffseinrichtung (24) mindestens ein Halteelement (22) an einem schienenförmigen Tragkörper (23) aufweist, der zwischen der Befestigungsschiene (27) und einem Verbindungsteil (31) gehalten ist und
das mindestens eine Haltelement (22) in die Aussparungen (21) des Wagenkastens eingreift.

22. Befestigungsanordnung nach Anspruch 21,
**dadurch gekennzeichnet, dass**
der schienenförmige Tragkörper (23) gemeinsam mit dem Verbindungsteil (31) an der Befestigungsschiene (13) angebracht ist.

23. Befestigungsanordnung nach Anspruch 20 oder 21,
**dadurch gekennzeichnet, dass**
der schienenförmige Tragkörper (23) sich in seiner Längsrichtung erstreckende Langlöcher (34,35) aufweist,
die Langlöcher (34,35) eine Mindestlänge haben, die dem Abstand zweier benachbarter Aussparungen (21) entspricht, und in die Langlöcher (34,35) Befestigungselemente hineinragen.

## Claims

1. Variable securing arrangement for an interior equipment element (14; 30) on the body of a vehicle, in particular a passenger seat at the side wall of a rail vehicle, having at least one body-side engagement device (5; 24) and having a securing rail (13; 27) which is connected to the interior equipment element (14; 30),
**characterized in that**
the securing arrangement has recesses (3; 21) in the longitudinal direction of the vehicle,
at least one retention element (4; 22) of the engagement device (5; 24) engages in the recesses (3; 21), and
the engagement device (5; 24) is connected to the securing rail (13; 27) in such a manner that the securing rail (13; 27) can be adjusted with the interior equipment element (14; 30) in the longitudinal direction of the vehicle relative to the engagement device (5; 24) by an adjustment path which corresponds to at least the largest spacing of two sequential recesses (3; 22).

2. Securing arrangement according to Claim 1,
**characterized in that**
the recesses (3; 21) are arranged with the same spacing with respect to each other.

3. Securing arrangement according to Claim 1 or 2,
**characterized in that**
the recesses (3; 21) are accommodated in a longitudinal rail (1; 20) on the body.

4. Securing arrangement according to one of Claims 1 to 3,
**characterized in that**
the engagement device (24) is connected to the securing rail (27) in such a manner that the securing rail (27) can be adjusted in a stepless manner.

5. Securing arrangement according to one of Claims 1 to 3,
**characterized in that**
the engagement device (5) is connected to the securing rail (13) in such a manner that the securing rail (13) can be adjusted in a stepless and stepped manner.

6. Securing arrangement according to one of the preceding claims,
**characterized in that**
the engagement device (5) is provided in the manner of a claw with lateral narrowed portions (6) for fitting by means of pivoting and retention in the recesses (3).

7. Securing arrangement according to Claim 5,
**characterized in that**
a sliding block (8) is located in the engagement device (5) and the securing rail (13) is connected to the sliding block (8) by means of at least one connection element (18) which is guided through a securing hole (11, 12) of the securing rail (13).

8. Securing arrangement according to Claim 7,
**characterized in that**
the connection element is a screw (18).

9. Securing arrangement according to Claim 7 or 8,
**characterized in that**
additional securing holes (15) are arranged in a horizontal row with the securing hole (11; 12) of the securing rail (13).

10. Securing arrangement according to one of Claims 7 to 10,
**characterized in that**
the securing holes (11, 12, 15) each have a hole spacing (B) from each other of the same size.

11. Securing arrangement according to Claim 9 or 10,
**characterized in that**
the hole spacing (B) of the securing holes (11, 12, 15) is a fraction of the spacing (A) of the recesses (3).

12. Securing arrangement according to one of Claims 7 to 11,
**characterized in that**
the engagement device (5) has elongate holes (17) with a spacing which corresponds to the hole spacing (B) of the securing holes (11, 12, 15).

13. Securing arrangement according to one of Claims 2 to 11,
**characterized in that**
the securing rail is constructed as a profile rail (13) and engages over the longitudinal rail (1).

14. Securing arrangement according to Claim 13,
**characterized in that**
a resilient intermediate layer (2) is arranged between the longitudinal rail (1) and the profile rail (13).

15. Securing arrangement according to one of the preceding Claims 6 to 14,
**characterized in that**
a resilient sleeve (7) for receiving the engagement device (5) in a positive-locking manner in the respective recess (3) is located in the narrowed portions (6) of the engagement device (5) .

16. Securing arrangement according to Claim 2 or 3,
**characterized in that**
the longitudinal rail (20) has an upper carrier face (25) which is accessible from the inner side of the body for one side (26) of the securing rail (27), and at least one connection member (31) of the engagement device (24) engages below the longitudinal rail (20) with one end (32) and is in abutment with the other end thereof with the securing rail (27).

17. Securing arrangement according to Claim 16,
**characterized in that**
the longitudinal rail (20) has a U-shaped profile, is fitted to the body so as to be open in an upward direction and forms at the upper side with a member the carrier face (25) for the securing rail (27).

18. Securing arrangement according to Claim 17,
**characterized in that**
the securing rail (27) is constructed in a hook-like manner at one side (26) thereof and engages with the hook-like side (26) thereof from the upper side in the U-shaped profile of the longitudinal rail (20), and
is secured to the interior equipment element (30) with the assembly side (29) thereof which faces away from the hook-like side (26).

19. Securing arrangement according to Claim 18,
**characterized in that**
a resilient intermediate layer (28) is located below the hook-like side (26) of the securing rail (27).

20. Securing arrangement according to one of Claims 16 to 19,
**characterized in that**
a resilient pad (33) is arranged between the longitudinal rail (20) and one side (32) of the securing rail (27).

21. Securing arrangement according to one of Claims 16 to 20,
**characterized in that**
the engagement device (24) has at least one retention element (22) on a rail-like carrier member (23) which is retained between the securing rail (27) and a connection member (31), and the at least one retention element (22) engages in the recesses (21) of the body.

22. Securing arrangement according to Claim 21,
**characterized in that**
the rail-like carrier member (23) is fitted to the securing rail (13) together with the connection member (31).

23. Securing arrangement according to Claim 20 or 21,
**characterized in that**
the rail-like carrier member (23) has elongate holes (34, 35) which extend in the longitudinal direction thereof,
the elongate holes (34, 35) have a minimum length which corresponds to the spacing of two adjacent recesses (21) and securing elements protrude into the elongate holes (34, 35).

## Revendications

1. Système de fixation variable d'un élément (14; 30) d'équipement intérieur à la caisse d'un véhicule, notamment d'un siège de passager à la paroi latérale d'un véhicule ferroviaire, comprenant au moins un dispositif (5; 24) de pénétration du côté de la caisse et comprenant une barre (13; 27) de fixation reliée à l'élément (14; 30) d'équipement intérieur,
**caractérisé en ce que**
le système de fixation a des évidements (3; 21) dans la direction longitudinale du véhicule,
un élément (4; 22) de maintien du dispositif (5; 24) de pénétration pénètre dans les évidements (3; 21) et
le dispositif (5; 24) de pénétration est relié à la barre (13; 27) de fixation de manière à pouvoir déplacer la barre (13; 27) de fixation avec l'élément (14; 30) d'équipement intérieur dans la direction longitudinale du véhicule par rapport au dispositif (5; 24) de pénétration d'une course de déplacement, qui correspond au moins à la distance la plus grande entre deux évidements (3; 22) successifs.

2. Système de fixation suivant la revendication 1,
**caractérisé en ce que**
les évidements (3; 21) sont équidistants.

3. Système de fixation suivant la revendication 1 ou 2,
**caractérisé en ce que**
les évidements (3; 21) sont ménagés dans une barre (1; 20) longue de la caisse.

4. Système de fixation suivant l'une des revendications 1 à 3,
**caractérisé en ce que**
le dispositif (24) de pénétration est relié à la barre (27) de fixation de manière à pouvoir déplacer, en continu, la barre (27) de fixation.

5. Système de fixation suivant l'une des revendications 1 à 3,
**caractérisé en ce que**
le dispositif (5) de pénétration est relié à la barre (13) de fixation de manière à ce que la barre (13) de fixation puisse être déplacée en continu et par échelon.

6. Système de fixation suivant l'une des revendications précédentes,
**caractérisé en ce que**
le dispositif (5) de pénétration est équipé à la manière d'un crampon de rétrécissements (6) latéraux pour l'introduction par pivotement et le maintien dans les évidements (3).

7. Système de fixation suivant la revendication 5,
**caractérisé en ce que**
un coulisseau (8) se trouve dans le dispositif (5) de pénétration et le barre (13) de fixation est reliée au coulisseau (8) au moyen d'au moins un élément (18) de liaison passant dans un trou (11, 12) de fixation de la barre (13) de fixation.

8. Système de fixation suivant la revendication 7,
**caractérisé en ce que**
l'élément de liaison est une vis (18).

9. Système de fixation suivant la revendication 7 ou 8, **caractérisé en ce que** d'autres trous (15) de fixation sont disposés suivant une rangée horizontale avec le trou (11; 12) de fixation de la barre (13) de fixation.

10. Système de fixation suivant l'une des revendications 7 à 10,
**caractérisé en ce que**
les trous (11, 12, 15) de fixation sont, entre eux, à un même intervalle (B).

11. Système de fixation suivant la revendication 9 ou 10,
**caractérisé en ce que**
l'intervalle (B) entre les trous (11, 12, 15) de fixation représente une fraction de la distance (A) entre les évidements (3).

12. Système de fixation suivant l'une des revendications 7 à 11,
**caractérisé en ce que**
le dispositif (5) de pénétration a des boutonnières (17) à une distance correspondant à la distance (B) entre les trous (11, 12, 15) de fixation.

13. Système de fixation suivant l'une des revendications 2 à 11,
**caractérisé en ce que**
la barre de fixation est constituée en barre (13) profilée et empiète sur la barre (1) longue.

14. Système de fixation suivant la revendication 13,
**caractérisé en ce qu'**
une couche (2) intermédiaire élastique est disposée entre la barre (1) longue et la barre (13) profilée.

15. Système de fixation suivant l'une des revendications précédentes 6 à 14,
**caractérisé en ce que**,
dans les rétrécissements (6) du dispositif (5) de pénétration se trouve une douille (7) élastique pour la réception à complémentarité de forme du dispositif (5) de pénétration dans l'évidement (3) respectif.

16. Système de fixation suivant la revendication 2 ou 3,
**caractérisé en ce que**
la barre (20) longue a une surface (25), accessible de l'intérieur de la caisse, pour supporter un côté (26) de la barre (27) de fixation et
au moins une pièce (31) de liaison du dispositif (24) de pénétration vient, par une extrémité (32), en dessous de la barre (20) longue et s'applique, par son autre extrémité, à la barre (27) de fixation.

17. Système de fixation suivant la revendication 16,
**caractérisé en ce que**
la barre (20) longue a un profil en U, est montée sur la caisse en s'ouvrant vers le haut et forme en haut, par une branche, la surface (25)de support de la barre (27) de fixation.

18. Système de fixation suivant la revendication 17,
**caractérisé en ce que**
la barre (27) de fixation est constituée sur l'un de ses côtés (26) en forme de crochet et pénètre, par son côté (26) en forme de crochet, par le haut dans le profil en U de la barre (20) longue, ainsi que
est fixée à l'élément (30) d'équipement intérieur par son côté (29) de montage éloigné du côté (26) en forme de crochet.

19. Système de fixation suivant la revendication 18,
**caractérisé en ce qu'**
une couche (28) intermédiaire élastique se trouve sous le côté (26) en forme de crochet de la barre (27) de fixation.

20. Système de fixation suivant l'une des revendications 16 à 19,
**caractérisé en ce qu'**
un coussin (33) élastique est disposé entre la barre (20) longue et le un côté (32) de la barre (27) de fixation.

21. Système de fixation suivant l'une des revendications 16 à 20,
**caractérisé en ce que**
le dispositif (24) de pénétration a au moins un élément (22) de maintien sur un corps (23) de support qui est en forme de barre et qui est maintenu entre la barre (27) de fixation et une pièce (31) de liaison et
le au moins un élément (22) de maintien pénètre dans les évidements (21) de la caisse.

22. Système de fixation suivant la revendication 21,
**caractérisé en ce que**
le corps (23) de support en forme de barre peut être monté conjointement avec la pièce (31) de liaison sur la barre (13) de fixation.

23. Système de fixation suivant la revendication 20 ou 21,
**caractérisé en ce que**
le corps (23) de support en forme de barre a des boutonnières (34, 35) s'étendant dans sa direction longitudinale,
les boutonnières (34, 35) ont une longueur minimum, qui correspond à la distance entre deux évidements (21) voisins et des éléments de fixation pénètrent dans les boutonnières (34, 35).
